# FASCICULE DE BREVET EUROPEEN

(11) **EP 3 264 914 B1**
(45) Date de publication et mention de la délivrance du brevet: **31.07.2019**
(21) Numéro de dépôt: 16707738.7
(22) Date de dépôt: 02.03.2016
(51) Int. Cl.: A23L 3/365, A23B 4/07

(54) **PROCEDE DE DECONGELATION**
ABTAUVERFAHREN
DEFROSTING METHOD

(30) Priorité: 04.03.2015 FR 1551805
(43) Date de publication de la demande: 10.01.2018
(73) Titulaire: Lutetia, 60128 Plailly (FR)
(72) Inventeur: DEUMIER, François, 95160 Montmorency (FR); BOUCHARD, Jérôme, 12459 Berlin (DE); LONGO, Philippe, 92190 Meudon (FR)
(74) Mandataire: Nony
(86) Numéro de dépôt international: PCT/EP2016/054418
(87) Numéro de publication internationale: WO 2016/139244

(56) Documents cités:
- EP-A1- 0 574 327
- EP-A1- 2 327 310
- WO-A1-2010/133356
- FR-A1- 2 711 485
- JP-A- H04 187 914
- YANUSHKIN N P ET AL: "Vacuum defrosting of meat blocks and cuts, and equipment for this purpose. (translated)", FSTA,, 1 janvier 1970 (1970-01-01), XP002580421,
- D.W. EVERINGTON ET AL: "Auftauen gefrorener Nahrungsmittel im Vakuum", DIE LEBENSMITTEL-INDUSTRIE, vol. 19, no. 10, 1 janvier 1972 (1972-01-01), pages 423-426, XP009184837,
- KAREL HOKE ET AL.: "Rizené rozmrazováni potravin", CZECH J. FOOD SCI., vol. 18, no. 5, 1 janvier 2000 (2000-01-01), pages 194-200, XP009184836,

## Description

La présente invention concerne un procédé de décongélation de produits alimentaires congelés.

On connait de la demande EP 0 574 327 A1 un procédé de décongélation de produits alimentaires dans lequel les produits sont placés dans une cuve hermétique fermée, mise sous vide. De la chaleur est apportée par injection de vapeur d'eau dans la cuve, cette injection pouvant se faire de façon intermittente ou continue. Dans un exemple de mise en oeuvre, un sel ou une saumure est introduit dans la cuve, de manière à commencer le saumurage des produits en même temps que leur décongélation. La mise sous vide présente alors l'avantage de favoriser la pénétration des exsudats et des sels dans les produits en cours de décongélation. Il est possible de maintenir l'injection de vapeur pour obtenir une cuisson au moins partielle des produits alimentaires.

FR 2 711 485 divulgue un procédé de barattage, de saumurage, de cuisson et de décongélation de viandes.

La demande de brevet EP 2 327 310 divulgue un procédé de décongélation de viande à une pression autour de 30 à 75 mbar. WO 2010/133356 A1 décrit également un procédé de décongélation de viandes hachées.

EP 2 327 310 A1 décrit un procédé de décongélation de produits à base de viande crue congelés dans un culbuteur qui comprend un tambour, la viande congelée étant ajoutée au tambour.

Il existe un besoin pour décongeler les produits alimentaires avec un apport d'eau réduit.

La décongélation classique à l'air libre se fait sans apport d'eau mais conduit à des pertes de protéines dans les exsudats de décongélation, qui sont génératrices de baisse de qualité et de coût de retraitement des effluents.

Un procédé de décongélation mettant en oeuvre un malaxeur équipé d'une double enveloppe dans laquelle circule un fluide d'une température contrôlée n'est pas entièrement satisfaisant non plus car il conduit à des temps de traitement plus longs et à un endommagement des produits, les transferts de chaleur étant relativement lents et les produits décongelés rapidement abimés par les chutes des blocs encore durs présents dans le malaxeur qui retombent sur le reste des produits.

Il existe par conséquent un besoin pour bénéficier d'un procédé de décongélation rapide avec apport d'eau réduit tout en préservant la qualité des produits.

L'invention a pour objet un procédé de décongélation de produits alimentaires congelés présents initialement sous forme de produit congelé individuellement IQF (Individual Quick Frozen) ou sous la forme d'un ou plusieurs blocs de produits alimentaires agglomérés au sein d'une enceinte d'un malaxeur, comportant les étapes consistant à :
- injecter de la vapeur d'eau dans l'enceinte pour provoquer, le cas échéant, la dissociation des produits alimentaires du ou des blocs et/ou ramollir la surface des blocs ou des produits IQF, la quantité totale de vapeur injectée étant inférieure ou égale à 10%, mieux à 8%, du poids total des produits à décongeler, cette injection de vapeur étant de préférence conduite sous pression réduite afin d'éviter une cuisson de surface,
- soumettre les produits alimentaires à une évaporation sous vide.

L'invention permet de maîtriser le niveau d'eau apporté lors de la décongélation en réduisant les pertes de protéines solubles.

L'injection de vapeur, essentiellement voire exclusivement au début du procédé permet de décongeler rapidement la surface des blocs et de provoquer leur dissociation, ce qui permet de réduire le phénomène d'écrasement précité. L'évaporation sous vide permet en même temps de sécher les produits.

L'invention peut, dans le cas de produits alimentaires en blocs, permettre notamment d'obtenir un produit moins abîmé, sans ajout d'eau, voire plus sec que s'il était frais, le procédé étant performant en termes de temps et de productivité, assurant une grande régularité d'une fabrication à l'autre, et son rendement permettant de réduire les pertes de protéines.

La quantité totale de vapeur injectée est de préférence comprise entre 0,1 et 10 % du poids total des produits alimentaires à décongeler, mieux entre 0,1 et 5%.

L'injection de vapeur est de préférence discontinue, ce qui permet de maintenir un niveau de vide plus élevé, afin de réduire les risques de cuisson de surface.

L'injection de vapeur peut ainsi alterner avec des phases de remise sous vide de l'enceinte.

Le procédé comporte une ou plusieurs phases durant laquelle ou lesquelles les produits alimentaires sont soumis à un vide ébouillantif à une pression absolue inférieure ou égale à 10 mbar au sein de l'enceinte.

De l'énergie thermique peut être apportée autrement aux produits alimentaires pendant et/ou après l'injection de vapeur et la dissociation du ou des blocs, pour poursuivre la décongélation.

Cette énergie thermique peut être apportée par conduction, rayonnement et/ou radiofréquence, de préférence par conduction.

Le malaxeur peut à cet effet comporter une double enveloppe au sein de laquelle circule un fluide à une température contrôlée, de préférence comprise entre 4°C et + 55°C. La température du fluide est choisie en fonction de l'avancement de la décongélation.

Les produits alimentaires peuvent être refroidis après décongélation, de préférence par conduction, notamment en abaissant la température du fluide circulant dans la double enveloppe, et/ou par évaporation endothermique par le vide.

La double enveloppe du malaxeur peut être ainsi alimentée durant la phase de refroidissement en fluide de refroidissement à une température contrôlée, de préférence comprise entre -10°C et + 10°C.

Le procédé comporte successivement dans un exemple non limitatif de mise en oeuvre :
- A) une phase de préparation durant laquelle le vide est fait dans le malaxeur avant l'injection de vapeur,
- B) une phase de décongélation vapeur, durant laquelle a lieu au moins une injection de vapeur, et de préférence plusieurs injections de vapeur espacées dans le temps, en alternance avec des phases de remise sous vide de l'enceinte,
- C) une phase de décongélation par apport d'énergie autrement que par de la vapeur, de préférence à l'aide d'une double enveloppe,
- D) une phase d'équilibrage, durant laquelle les produits alimentaires sont exposés au vide dans le malaxeur en rotation, avec une température de consigne produit inférieure à celle fixée durant la phase de décongélation C),
- E) une phase d'évaporation avec compensation d'endothermie, durant laquelle les produits alimentaires sont exposés au vide ébouillantif et soumis à un apport d'énergie avec une température de consigne T_{E} produit intermédiaire entre celle des étapes C) et D), avec de préférence 4 ≤ T_{E} ≤ +25°C, encore mieux +4<T_{E} <12°C,
Dans une variante, le procédé comporte successivement :
- A) une phase de préparation durant laquelle le vide est fait dans le malaxeur avant l'injection de vapeur,
- B) une phase de décongélation vapeur, durant laquelle a lieu au moins une injection de vapeur, et de préférence plusieurs injections de vapeur espacées dans le temps, en alternance avec des phases de remise sous vide de l'enceinte, ainsi qu'une décongélation par apport d'énergie autrement que par de la vapeur, de préférence à l'aide d'une double enveloppe,
- C) une phase d'équilibrage, durant laquelle les produits alimentaires sont exposés au vide dans le malaxeur en rotation, avec une température de consigne produit inférieure à celle fixée durant la phase de décongélation B),
- D) une phase d'évaporation avec compensation d'endothermie, durant laquelle les produits alimentaires sont exposés au vide ébouillantif et soumis à un apport d'énergie avec une température de consigne T_{E} produit intermédiaire entre celle des étapes B) et D), avec de préférence 4 ≤ T_{E} ≤ +25°C, encore mieux +4<T_{E} <12°C,
Le procédé peut comporter en outre :
- une phase d'évaporation et de refroidissement, durant laquelle les produits alimentaires sont exposé au vide et soumis à un refroidissement avec une température de consigne produit T_{F} inférieure à celle de l'étape E) du premier exemple ci-dessus ou D) de la variante ci-dessus, avec de préférence -1 ≤ T_{F} ≤ 6°C, mieux 0,5<T_{F}<6°C.

Les produits alimentaires sont par exemple constitués par des morceaux de viande, étant entendu que l'invention n'est pas limitée à la décongélation de viande, et s'applique à tous produits alimentaires en blocs ou congelés IQF.

Du sel peut être rajouté dans le malaxeur.

La vitesse de rotation du malaxeur peut être comprise entre 0,25 et 6 tr/min, de préférence entre 0,5 et 1,25 tr/min.

L'invention pourra être mieux comprise à la lecture de la description détaillée qui va suivre, d'un exemple de mise en oeuvre non limitatif de celle-ci, et à l'examen du dessin annexé, sur lequel :

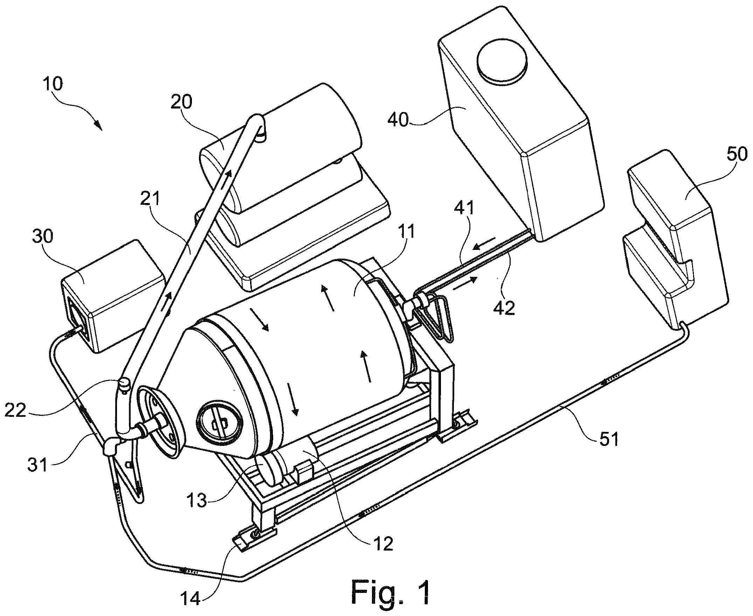

- la figure 1 représente, de façon schématique, en perspective, un exemple d'installation pour la mise en oeuvre du procédé selon l'invention.

L'installation 10 représentée à la figure 1 permet la mise en oeuvre du procédé selon l'invention.

Cette installation 10 comporte un malaxeur 11, comportant une cuve entraînée en rotation sur elle-même autour d'un axe de rotation qui est par exemple horizontal. Cette cuve peut être entraînée en rotation grâce à un berceau équipé d'un moteur électrique 12, et d'au moins un galet d'entraînement 13.

Le berceau peut être équipé à sa base de pesons 14 qui permettent de connaître le poids des produits alimentaires placés dans la cuve.

L'installation comporte également un groupe de vide ébouillantif 20 qui est relié par une canalisation 21 à l'enceinte du malaxeur grâce à un joint tournant. La canalisation 21 peut être équipée d'un capteur de pression 22 permettant de connaître la pression dans cette enceinte. Le cas échéant, comme illustré, l'installation 10 comporte une pompe à vide standard 30, pour obtenir un vide primaire, non ébouillantif. Le groupe de vide 20 permet de descendre assez bas en pression pour entrer en régime ébouillantif. La pompe à vide 30 est reliée par une canalisation 31 à l'enceinte, et permet d'obtenir le vide primaire dans l'enceinte de manière plus économique.

Le malaxeur 11 est à double enveloppe, dans laquelle circule un fluide à température contrôlée. Ce fluide circule également par des canalisations 41 et 42 d'aller et retour reliées à un groupe thermique 40 permettant de produire du chaud ou du froid, selon les besoins.

L'installation 10 comporte également un générateur de vapeur 50 relié par une canalisation 51 au malaxeur, qui permet d'injecter dans l'enceinte contenant les produits alimentaires de la vapeur.

### Exemple :

On décongèle dans un malaxeur 240 kg de blocs de viande de volaille.

### Phase de préparation :

Le générateur de vapeur 50 est mis en chauffe et le vide est fait dans le malaxeur 11 au moyen de la pompe à vide 30.

### Phase de décongélation vapeur :

Pendant 50 minutes, on alterne des phases d'injection de vapeur (débit de 240 g/min), par exemple de moins de 2 min, avec le malaxeur en rotation par exemple à 1 tr/.min, des phases de rotation à 1 tr/min sans injection de vapeur, par exemple de plus de 5 min, et des phases de remise sous vide avec la pompe à vide 30, par exemple moins de 2 min. Le poids de vapeur injecté sur 10 minutes est dans cet exemple de 2,4 kg, soit 1 % du poids de viande.

### Phase de décongélation via la double-enveloppe :

On fait tourner le malaxeur pendant une durée comprise entre 4 h et 8 h à 1 tr/min avec la pompe à vide 30 en fonctionnement et la double enveloppe alimentée en eau glycolée chaude régulée à une température comprise entre 25 et 40 °C par le groupe thermique.

La température de régulation sur le produit T_{C} est comprise entre 10°C et 15°C.

### Phase d'équilibrage:

On fait tourner le malaxeur pendant une durée comprise entre 0,5 h et 2 h avec la pompe à vide 30 en fonctionnement et la double enveloppe alimentée en eau glycolée froide régulée à une température négative par le groupe thermique. La température de régulation sur le produit T_{D} est par exemple comprise entre 1 et 6 °C.

### Phase d'évaporation avec compensation d'endothermie :

On enchaîne ensuite pendant une durée comprise entre 5 h et12 h avec le groupe de vide ébouillantif 20 en fonctionnement et la double enveloppe alimentée en eau glycolée chaude régulée à une température comprise entre 10 °C et 20 °C par le groupe thermique. La température de régulation T_{E} sur le produit est par exemple comprise entre 4 °C et 12°C.

### Phase d'évaporation et de refroidissement :

On entraîne pour terminer le malaxeur en rotation avec le groupe de vide ébouillantif 20 en fonctionnement et la double enveloppe alimentée en eau glycolée froide régulée à une température légèrement négative par le groupe thermique. La température de régulation sur le produit T_{F} est par exemple comprise entre 0,5 °C et 3 °C.

Bien entendu, l'invention n'est pas limitée à l'exemple illustré.

Par "malaxeur", il faut comprendre tout appareil permettant de brasser les aliments contenus à l'intérieur d'une façon qui soit compatible avec le but recherché. Il peut s'agir d'une cuve rotative, comme illustré dans le dessin de la présente demande, ou d'un mélangeur sous vide à bras.

## Revendications

1. Procédé de décongélation de produits alimentaires congelés présents initialement sous forme de produits congelés individuellement (IQF) ou sous la forme d'un ou plusieurs blocs de produits alimentaires agglomérés au sein d'une enceinte d'un malaxeur (11) comportant les étapes consistant à :
- injecter de la vapeur d'eau dans l'enceinte pour provoquer le cas échéant la dissociation des produits alimentaires du ou des blocs et/ou ramollir la surface des blocs ou des produits IQF, la quantité totale de vapeur injectée étant inférieure ou égale à 10% du poids total des produits à décongeler,
- soumettre les produits alimentaires à une évaporation sous vide, la pression absolue dans l'enceinte, durant une ou plusieurs phases de vide ébouillantif en présence des produits alimentaires, étant inférieure ou égale à 10 mbar.

2. Procédé selon la revendication 1, la quantité totale de vapeur injectée étant comprise entre 0,1 et 10 % du poids total des produits alimentaires à décongeler, mieux entre 0,1 et 5%.

3. Procédé selon la revendication 1 ou 2, l'injection de vapeur étant discontinue, l'injection de vapeur alternant de préférence avec des phases de remise sous vide de l'enceinte.

4. Procédé selon l'une quelconque des revendications précédentes, l'injection de vapeur étant interrompue après dissociation du ou des blocs.

5. Procédé selon l'une quelconque des revendications précédentes, de l'énergie thermique étant apportée aux produits alimentaires pendant et/ou après l'injection de vapeur et la dissociation du ou des blocs pour poursuivre la décongélation.

6. Procédé selon la revendication 5, l'énergie thermique étant apportée par conduction, rayonnement et/ou radiofréquence, de préférence par conduction.

7. Procédé selon l'une quelconque des revendications précédentes, le malaxeur comportant une double enveloppe au sein de laquelle circule un fluide à une température contrôlée, de préférence comprise entre 4°C et + 55°C.

8. Procédé selon l'une quelconque des revendications précédentes, les produits alimentaires étant refroidis après décongélation, de préférence par conduction ou par évaporation endothermique par le vide.

9. Procédé selon la revendication 8, le malaxeur étant à double enveloppe, et alimenté durant la phase de refroidissement en fluide de refroidissement à une température contrôlée, de préférence comprise entre -10°C et + 10°C.

10. Procédé selon l'une quelconque des revendications précédentes, comportant successivement :
- A) une phase de préparation durant laquelle le vide est fait dans le malaxeur avant l'injection de vapeur,
- B) une phase de décongélation vapeur, durant laquelle a lieu au moins une injection de vapeur, et de préférence plusieurs injections de vapeur espacées dans le temps, en alternance avec des phases de remise sous vide de l'enceinte,
- C) une phase de décongélation par apport d'énergie autrement que par de la vapeur, de préférence à l'aide d'une double enveloppe,
- D) une phase d'équilibrage, durant laquelle les produits alimentaires sont exposés au vide dans le malaxeur en rotation, avec une température de consigne produit inférieure à celle fixée durant la phase de décongélation C),
- E) une phase d'évaporation avec compensation d'endothermie, durant laquelle les produits alimentaires sont exposés au vide ébouillantif et soumis à un apport d'énergie avec une température de consigne produit T_{E} intermédiaire entre celle des étapes C) et D), avec de préférence 4 ≤ T_{E} ≤ 25°C, mieux 6<T_{E}<12°C.
- F) éventuellement, une phase d'évaporation et de refroidissement, durant laquelle les produits alimentaires sont exposé au vide et soumis à un refroidissement avec une température de consigne produit T_{F} inférieure à celle de l'étape E) avec de préférence -1<T_{F}<6°C, mieux 0,5 ≤ T_{F} < 6°C

11. Procédé selon l'une quelconque des revendications 1 à 9, comportant successivement :
- A) une phase de préparation durant laquelle le vide est fait dans le malaxeur avant l'injection de vapeur,
- B) une phase de décongélation vapeur, durant laquelle a lieu au moins une injection de vapeur, et de préférence plusieurs injections de vapeur espacées dans le temps, en alternance avec des phases de remise sous vide de l'enceinte, ainsi qu'une décongélation par apport d'énergie autrement que par de la vapeur, de préférence à l'aide d'une double enveloppe,
- C) une phase d'équilibrage, durant laquelle les produits alimentaires sont exposés au vide dans le malaxeur en rotation, avec une température de consigne produit inférieure à celle fixée durant la phase de décongélation B),
- D) une phase d'évaporation avec compensation d'endothermie, durant laquelle les produits alimentaires sont exposés au vide ébouillantif et soumis à un apport d'énergie avec une température de consigne produit T_{E} intermédiaire entre celle des étapes B) et C), avec de préférence 4 ≤ T_{E} ≤ 25°C, mieux 4<T_{E}<12°C.

12. Procédé selon la revendication 10 ou 11, comportant en outre une phase d'évaporation et de refroidissement, durant laquelle les produits alimentaires sont exposés au vide et soumis à un refroidissement avec une température de consigne produit T_{F} inférieure à celle de l'étape E) de la revendication 10 ou à celle D) de la revendication 11, avec de préférence -1≤T_{F}≤6°C, mieux 0,5<T_{F}<6°C.

13. Procédé selon l'une quelconque des revendications précédentes, du sel étant ajouté dans le malaxeur.

14. Procédé selon l'une quelconque des revendications précédentes, la vitesse de rotation du malaxeur étant comprise entre 0,25 et 6 tr/min, de préférence entre 0,5 et 1,25 tr/min.

## Patentansprüche

1. Verfahren zum Abtauen von gefrorenen Lebensmitteln, die anfänglich in Form von einzeln gefrorenen Produkten (IQF) oder in Form von einem oder mehreren Blöcken von agglomerierten Lebensmitteln in einem Behälter eines Mischers (11) vorhanden sind, das die folgenden Schritte aufweist, die darin bestehen:
- Wasserdampf in den Behälter einzuspritzen, um gegebenenfalls das Trennen der Lebensmittelprodukte von dem Block oder den Blöcken zu bewirken und/oder die Oberfläche der Blöcke oder der IQF-Produkte einzuweichen, wobei die Gesamtmenge an eingespritztem Dampf weniger oder gleich 10 % des Gesamtgewichtes der abzutauenden Produkte beträgt,
- die Lebensmittelprodukte einer Vakuumverdampfung zu unterwerfen, wobei der absolute Druck in dem Behälter während einer oder mehrerer abbrühenden Vakuumphasen in Anwesenheit der Lebensmittelprodukte weniger oder gleich 10 mbar beträgt.

2. Verfahren nach Anspruch 1, wobei die Gesamtmenge an eingespritztem Dampf zwischen 0,1 und 10 % des Gesamtgewichts der abzutauenden Lebensmittelprodukte, besser noch zwischen 0,1 und 5 %, beträgt.

3. Verfahren nach Anspruch 1 oder 2, wobei das Dampfeinspritzen diskontinuierlich ist, wobei das Dampfeinspritzen vorzugsweise mit Phasen des wieder unter Vakuum Setzens des Behälters abwechselt.

4. Verfahren nach einem der vorhergehenden Ansprüche, wobei das Dampfeinspritzen nach dem Trennen des Blocks oder der Blöcke unterbrochen wird.

5. Verfahren nach einem der vorhergehenden Ansprüche, wobei den Lebensmittelprodukten Wärmeenergie während und/oder nach dem Dampfeinspritzen und dem Trennen des Blocks oder der Blöcke zugeführt wird, um das Abtauen fortzusetzen.

6. Verfahren nach Anspruch 5, wobei die Wärmeenergie durch Leitung, Ausstrahlung und/oder Hochfrequenz, vorzugsweise durch Leitung zugeführt wird.

7. Verfahren nach einem der vorhergehenden Ansprüche, wobei der Mischer einen Doppelmantel aufweist, in dem ein Fluid bei einer gesteuerten Temperatur, vorzugsweise zwischen 4 °C und + 55 °C, zirkuliert.

8. Verfahren nach einem der vorhergehenden Ansprüche, wobei die Lebensmittelprodukte nach dem Abtauen vorzugsweise durch Leitung oder durch endotherme Verdampfung durch Vakuum gekühlt werden.

9. Verfahren nach Anspruch 8, wobei der Mischer mit Doppelmantel ist und während der Phase des Abkühlens mit Fluid bei einer gesteuerten Temperatur, vorzugsweise zwischen - 10 °C und + 10 °C, versorgt wird.

10. Verfahren nach einem der vorhergehenden Ansprüche, nacheinander umfassend:
- A) eine Vorbereitungsphase, bei der das Vakuum in dem Mischer vor dem Dampfeinspritzen aufgebaut wird,
- B) eine Abtauphase durch Dampf, bei der mindestens ein Dampfeinspritzen stattfindet, und vorzugsweise mehrere zeitlich beabstandete Dampfeinspritzungen, die sich mit den Phasen des wieder unter Vakuum Setzens des Behälters abwechseln,
- C) eine Abtauphase durch Zufuhr von anderer Energie als durch Dampf, vorzugsweise mit Hilfe von einem Doppelmantel,
- D) eine Ausgleichsphase, bei der die Lebensmittelprodukte in dem Mischer in Drehung mit einer Produktsolltemperatur, die niedriger als jene ist, die bei der Abtauphase C) festgelegt wird, dem Vakuum ausgesetzt werden,
- E) eine Verdampfungsphase mit endothermer Kompensation, bei der die Lebensmittelprodukte dem abbrühenden Vakuum ausgesetzt und einer Energiezufuhr mit einer Produktsolltemperatur T_{E} unterzogen werden, die zwischen jener von Schritt C) und Schritt D) liegt, mit vorzugsweise 4 ≤ T_{E} ≤ 25 °C, besser 6 < T_{E} < 12 °C.
- F) eventuell eine Verdampfungs- und Abkühlphase, bei der die Lebensmittelprodukte dem Vakuum ausgesetzt und einem Abkühlen mit einer Produktsolltemperatur T_{F} unterzogen werden, die niedriger als jene von Schritt E) ist, mit vorzugsweise -1 < T_{F} < 6 °C, besser 0,5 < T_{F} < 6 °C.

11. Verfahren nach einem der Ansprüche 1 bis 9, nacheinander umfassend:
- A) eine Vorbereitungsphase, bei der das Vakuum in dem Mischer vor dem Dampfeinspritzen aufgebaut wird,
- B) eine Abtauphase durch Dampf, bei der mindestens ein Dampfeinspritzen stattfindet, und vorzugsweise mehrere zeitlich beabstandete Dampfeinspritzungen, die sich mit den Phasen des wieder unter Vakuum Setzens des Behälters abwechseln, und eine Abtauphase durch Zufuhr von anderer Energie als durch Dampf, vorzugsweise mit Hilfe von einem Doppelmantel,
- C) eine Ausgleichsphase, bei der die Lebensmittelprodukte in dem Mischer in Drehung mit einer Produktsolltemperatur, die niedriger als jene ist, die bei der Abtauphase B) festgelegt wird, dem Vakuum ausgesetzt werden,
- D) eine Verdampfungsphase mit endothermer Kompensation, bei der die Lebensmittelprodukte dem abbrühenden Vakuum ausgesetzt und einer Energiezufuhr mit einer Produktsolltemperatur T_{E} unterzogen werden, die zwischen jener von Schritt B) und Schritt C) liegt, mit vorzugsweise 4 ≤ T_{E} ≤ 25 °C, besser 4 < T_{E} < 12 °C.

12. Verfahren nach Anspruch 10 oder 11, ferner umfassend eine Verdampfungs- und Abkühlphase, bei der die Lebensmittelprodukte dem Vakuum ausgesetzt und einem Abkühlen mit einer Produktsolltemperatur T_{F} unterzogen werden, die niedriger als jene von Schritt E) von Anspruch 10 oder als jene von D) von Anspruch 11 ist, mit vorzugsweise -1 ≤ T_{F} ≤ 6 °C, besser 0,5 < T_{F} < 6 °C.

13. Verfahren nach einem der vorhergehenden Ansprüche, wobei Salz in den Mischer hinzugefügt wird.

14. Verfahren nach einem der vorhergehenden Ansprüche, wobei die Drehgeschwindigkeit des Mischers zwischen 0,25 und 6 U/min, vorzugsweise zwischen 0,5 und 1,25 U/min, beträgt.

## Claims

1. Process for defrosting frozen food products initially present in the form of individually frozen products (IQFs) or in the form of one or more blocks of food products agglomerated within a chamber of a mixer (11), comprising the steps consisting in:
- injecting steam into the chamber in order to cause, where appropriate, the dissociation of the food products of the block(s) and/or soften the surface of the blocks or of the IQF products, the total amount of steam injected being less than or equal to 10% of the total weight of the products to be defrosted,
- subjecting the food products to vacuum evaporation, the absolute pressure in the chamber during one or more phases of boiling vacuum in the presence of the food products being less than or equal to 10 mbar.

2. Process according to Claim 1, the total amount of steam injected being between 0.1 and 10% of the total weight of the food products to be defrosted, better still between 0.1 and 5%.

3. Process according to Claim 1 or 2, the injection of steam being discontinuous, the injection of steam preferably alternating with phases of recreating a vacuum in the chamber.

4. Process according to any one of the preceding claims, the injection of steam being interrupted after dissociation of the block(s).

5. Process according to any one of the preceding claims, heat energy being supplied to the food products during and/or after the injection of steam and the dissociation of the block(s) to continue the defrosting.

6. Process according to Claim 5, the heat energy being supplied by conduction, radiation and/or radiofrequency, preferably by conduction.

7. Process according to any one of the preceding claims, the mixer comprising a jacket within which a fluid circulates at a controlled temperature, preferably of between 4ºC and +55ºC.

8. Process according to any one of the preceding claims, the food products being cooled after defrosting, preferably by conduction or endothermic evaporation by the vacuum.

9. Process according to Claim 8, the mixer being a jacketed mixer, and being supplied during the cooling phase with a coolant at a controlled temperature, preferably of between -10ºC and +10ºC.

10. Process according to any one of the preceding claims, comprising, in succession:
- A) a preparation phase, during which the vacuum is created in the mixer before steam is injected,
- B) a steam defrosting phase, during which at least one steam injection takes place, and preferably several steam injections spaced apart in time, alternating with phases of recreating a vacuum in the chamber,
- C) a defrosting phase by supplying energy other than by steam, preferably using a jacket,
- D) an equilibration phase, during which the food products are exposed to the vacuum in the rotating mixer, with a product setpoint temperature that is lower than that fixed during the defrosting phase C),
- E) a phase of evaporation with endothermal compensation, during which the food products are exposed to the boiling vacuum and subjected to a supply of energy with a product setpoint temperature T_{E} that is intermediate between that of steps C) and D), preferably with 4 ≤ T_{E} ≤ 25°C, better still 6 < T_{E} < 12°C,
- F) optionally, a phase of evaporation and cooling, during which the food products are exposed to the vacuum and subjected to cooling with a product setpoint temperature T_{F} that is lower than that of step E), preferably with -1<T_{F}<6ºC, better still 0.5<T_{F}<6ºC.

11. Process according to any one of Claims 1 to 9, comprising, in succession:
- A) a preparation phase, during which the vacuum is created in the mixer before steam is injected,
- B) a steam defrosting phase, during which at least one steam injection takes place, and preferably several steam injections spaced apart in time, alternating with phases of recreating a vacuum in the chamber, and also defrosting by supplying energy other than by steam, preferably using a jacket,
- C) an equilibration phase, during which the food products are exposed to the vacuum in the rotating mixer, with a product setpoint temperature that is lower than that fixed during the defrosting phase B),
- D) a phase of evaporation with endothermal compensation, during which the food products are exposed to the boiling vacuum and subjected to a supply of energy with a product setpoint temperature T_{E} that is intermediate between that of steps B) and C), preferably with 4≤T_{E}≤25ºC, better still 4<T_{E}<12ºC.

12. Process according to Claim 10 or 11, also comprising a phase of evaporation and cooling during which the food products are exposed to the vacuum and subjected to a cooling with a product setpoint temperature T_{F} that is lower than that of step E) of Claim 10 or that of D) of Claim 11, preferably with -1≤T_{F}≤6°C, better still 0.5<T_{F}<6ºC.

13. Process according to any one of the preceding claims, salt being added to the mixer.

14. Process according to any one of the preceding claims, the rotational speed of the mixer being between 0.25 and 6 rpm, preferably between 0.5 and 1.25 rpm.
